(19)

**Europäisches Patentamt**
**European Patent Office**
**Office européen des brevets**

(11)  **EP 2 781 043 B1**

(12) **EUROPEAN PATENT SPECIFICATION**

(45) Date of publication and mention
of the grant of the patent:
**26.08.2015  Bulletin 2015/35**

(51) Int Cl.:
*H04B 17/26* (2015.01)    *H04W 24/00* (2009.01)
*H04B 17/318* (2015.01)

(21) Application number: **12808522.2**

(22) Date of filing: **13.11.2012**

(86) International application number:
**PCT/SE2012/051246**

(87) International publication number:
**WO 2013/074025 (23.05.2013 Gazette 2013/21)**

(54) **METHODS AND ARRANGEMENTS FOR REFERENCE SIGNAL MEASUREMENTS**

VERFAHREN UND ANORDNUNGEN FÜR REFERENZSIGNALMESSUNGEN

PROCÉDÉS ET SYSTÈMES POUR MESURER UN SIGNAL DE RÉFÉRENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.11.2011  US 201161560531 P**

(43) Date of publication of application:
**24.09.2014  Bulletin 2014/39**

(73) Proprietor: **Telefonaktiebolaget LM Ericsson
(Publ)**
**164 83 Stockholm (SE)**

(72) Inventors:
• **JÖNGREN, George**
**S-174 62 Sundbyberg (SE)**
• **SORRENTINO, Stefano**
**S-171 68 Solna (SE)**
• **CUI, Tao**
**S-194 68 Upplands Väsby (SE)**

(74) Representative: **Brann AB**
**P.O. Box 12246**
**102 26 Stockholm (SE)**

(56) References cited:
**US-A1- 2005 239 410**

• **SAMSUNG: "CoMP architecture and CoMP RRM
measurement", 3GPP DRAFT; R2-116070-COMP,
3RD GENERATION PARTNERSHIP PROJECT
(3GPP), MOBILE COMPETENCE CENTRE ; 650,
ROUTE DES LUCIOLES ; F-06921 SOPHIA-
ANTIPOLIS CEDEX ; FRANCE, vol. RAN WG2, no.
San Francisco, USA; 20111114 - 20111118, 7
November 2011 (2011-11-07), XP050564232,**
• **ALCATEL-LUCENT (EMAIL DISCUSSION
RAPPORTEUR): "Email discussion: [75#37] â
LTE: HetNet: Large scale simulations", 3GPP
DRAFT; R2-115210_[75#37]HTN_
LARGESCALESIM_SUMMARY _V18_ALU5, 3RD
GENERATION PARTNERSHIP PROJECT (3GPP),
MOBILE COMPETENCE CENTRE ; 650, ROUTE
DES LUCIOLES ; F-06921 SOPHIA-ANTIPOLIS
CEDEX ; FRANCE, vol. RAN WG2, no. Zhuhai;
20111010, 4 October 2011 (2011-10-04),
XP050540993,**
• **"3rd Generation Partnership Project; Technical
Specification Group Radio Access Network;
Evolved Universal Terrestrial Radio Access (E-
UTRA); Radio Resource Control (RRC); Protocol
specification (Release 10)", 30 September 2011
(2011-09-30), Mobile Competence Centre ; 650,
route des Lucioles ; F-06921 Sophia-Antipolis
Cedex ; France, XP050554294, pages 79-81, cited
in the application paragraph [5.5.3]**

**Description**

TECHNICAL FIELD

The present invention relates generally to methods and arrangements for performing reference signal measurements.

BACKGROUND

The 3rd Generation Partnership Project (3GPP) is responsible for the standardization of the Universal Mobile Telecommunication System (UMTS) and Long Term Evolution (LTE). The 3GPP work on LTE is also referred to as Evolved Universal Terrestrial Access Network (E-UTRAN). LTE is a technology for realizing high-speed packet-based communication that can reach high data rates both in the downlink and in the uplink, and is thought of as a next generation mobile communication system relative to UMTS.

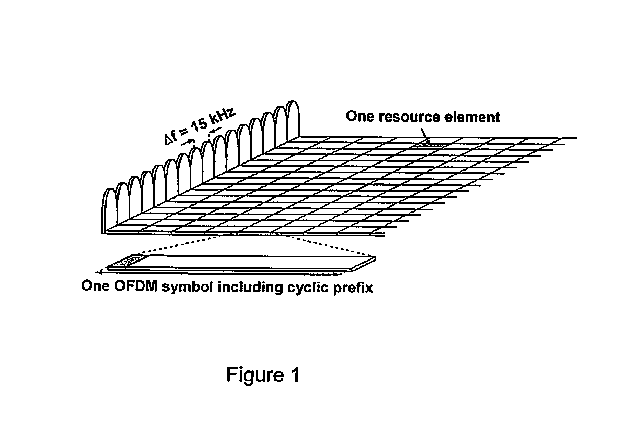

LTE uses orthogonal frequency division multiplexing (OFDM) in the downlink and Discrete Fourier Transform-spread (DFT-spread) OFDM in the uplink. The basic LTE physical resource can thus be seen as a time-frequency grid as illustrated in Figure 1, where each resource element corresponds to one subcarrier during one OFDM symbol interval on a particular antenna port.

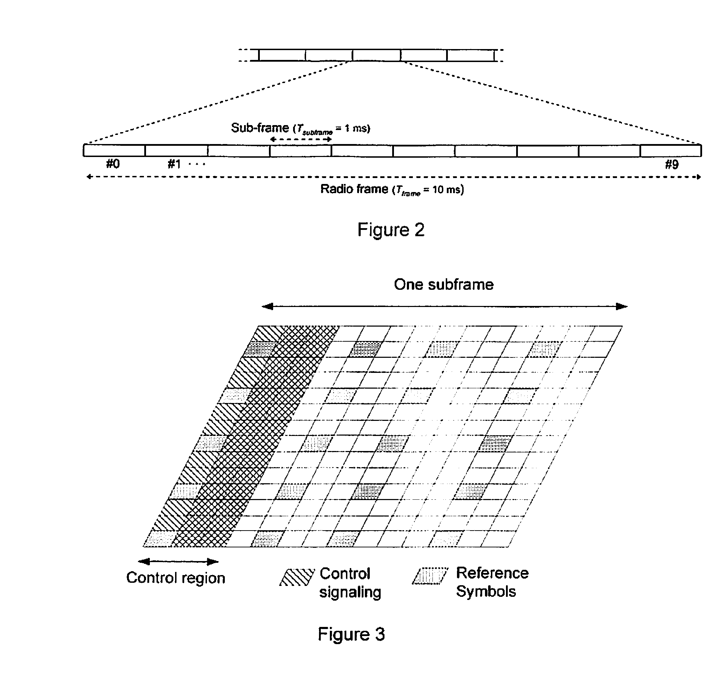

In the time domain, LTE downlink transmissions are organized into radio frames of 10 ms, each radio frame consisting of ten equally-sized subframes of 1 ms as illustrated in Figure 2. A subframe is divided into two slots, each of 0.5 ms time duration.

The resource allocation in LTE is described in terms of resource blocks, where a resource block corresponds to one slot in the time domain and 12 contiguous 15 kHz subcarriers in the frequency domain. Two time-consecutive resource blocks represent a resource block pair and corresponds to the time interval upon which scheduling operates.

Demodulation of sent data requires estimation of the radio channel which is done by using transmitted reference symbols (RS), i.e. symbols known by the receiver. In LTE, cell specific reference symbols (CRS) are transmitted in all downlink subframes and in addition to assisting downlink channel estimation they are also used for mobility measurements and for uplink power control performed by the UEs. LTE also supports UE specific RS aimed only for assisting channel estimation for demodulation purposes. Figure 3 illustrates how the mapping of physical control/data channels and signals can be done on resource elements within a downlink subframe. In this example, the PDCCHs occupy the first out of three possible OFDM symbols, so in this particular case the mapping of data could start already at the second OFDM symbol. Since the CRS is common to all UEs in the cell, the transmission of CRS cannot be easily adapted to suit the needs of a particular UE. This is in contrast to UE specific RS where each UE has RS of its own placed in the data region of Figure 3 as part of PDSCH.

As previously indicated, CRS are not the only reference symbols available in LTE. As of LTE Release-10, a new RS concept was introduced with separate UE specific RS for demodulation of PDSCH and RS for measuring the channel for the purpose of channel state information (CSI) feedback from the UE. The latter are referred to as CSI-RS. CSI-RS are not transmitted in every subframe and they are generally sparser in time and frequency than RS used for demodulation. CSI-RS transmissions may occur every $5^{th}$, $10^{th}$, $20^{th}$, $40^{th}$, or $80^{th}$ subframe according to a Radio Resource Control (RRC) configured periodicity parameter and an RRC configured subframe offset.

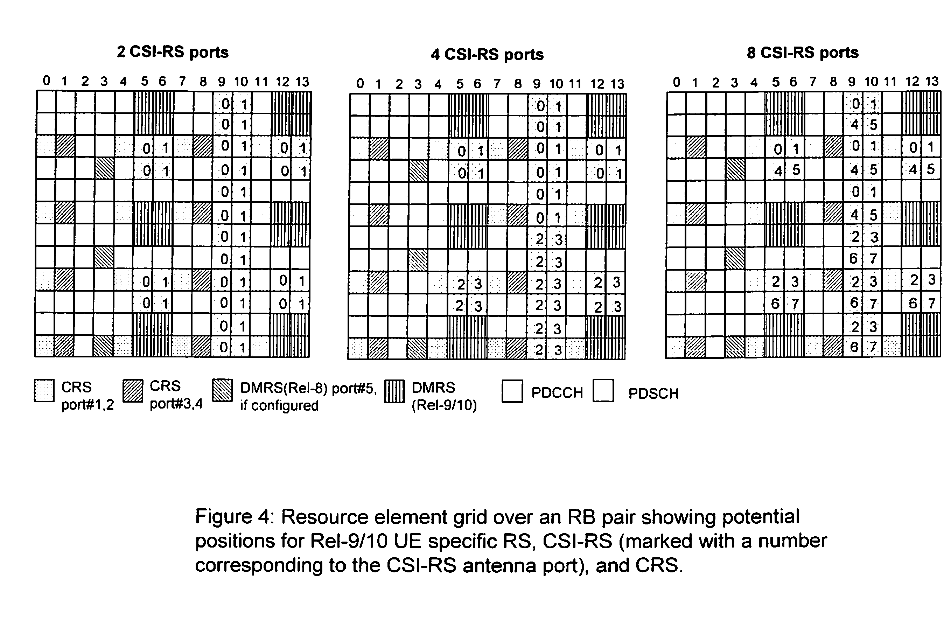

A detailed illustration of which resource elements within a resource block pair that may potentially be occupied by the new UE specific RS and CSI-RS is provided in Figure 4. The CSI-RS utilizes an orthogonal cover code of length two to overlay two antenna ports on two consecutive REs. As seen, many different CSI-RS pattern are available. For the case of 2 CSI-RS antenna ports we see that there are 20 different patterns within a subframe. The corresponding number of patterns is 10 and 5 for 4 and 8 CSI-RS antenna ports, respectively. For TDD, some additional CSI-RS patterns are available.

In the uplink, so-called sounding reference symbols (SRS) may be used for acquiring channel state information, CSI, about the uplink channel from the UE to the receiving nodes. If SRS is used, it is transmitted by the UE on the last DFT spread OFDM symbol of a subframe. SRS can be configured for periodic transmission as well for dynamic triggering as part of the uplink grant. The primary use for SRS is to aid the scheduling and link adaptation in the uplink. But for TDD, SRS is sometimes used to determine beamforming weights for the downlink by exploiting the fact that the downlink and uplink channels are the same when the same carrier frequency is used for downlink and uplink (channel reciprocity).

While the Physical Uplink Shared Channel (PUSCH) carries data in the uplink, the Physical Uplink Control Channel (PUCCH) is used for control. PUCCH is a narrowband channel using an RB pair where the two RBs are on opposite sides of the potential scheduling bandwidth. PUCCH is used for conveying ACK/NACKs, periodic CSI feedback, and scheduling requests to the network.

As mentioned above, one of the uses for reference signals is to perform mobility measurements. In order to support mobility, a terminal needs to continuously search for, synchronize to, and estimate the reception quality of both its serving cell and neighbor cells. The reception quality of the neighbor cells, in relation to the reception quality of the current cell, is then evaluated in order to conclude if a handover (for terminals in connected mode) or cell re-selection (for terminals in idle mode) should be carried out. For terminals in connected mode, the handover decision is taken by the network based on measurement reports provided by the terminals. Examples of such reports are reference signal received power (RSRP) and reference signal received quality (RSRQ).

Reference signal measurements are also used for uplink power control. Dynamic control of the mobile station transmission power is a common feature in cellular systems. The objectives of uplink power control include: (a) reaching a sufficient received power and signal quality on the used channel at the serving base station, (b) limiting the received power (interference) at non-serving base stations, (c) limiting the received power (interference) on non-used channels at the serving base station and (d) reducing the output power level to limit power consumption and save battery life in the mobile station.

Power control schemes can further be divided in to the categories 'closed-loop' and 'open-loop' depending on what type of measurement input is used. Closed-loop schemes make use of measurements on the same link direction that the power control applies to, i.e. on the uplink for uplink closed loop power control. Open-loop schemes make use of measurements on the opposite link direction, i.e. on the downlink for uplink open-loop power control. In comparison, closed-loop schemes are typically more accurate than open-loop schemes, but also require more control signaling overhead.

According to Rel-10 LTE UL PC is performed by estimating a path loss (PL) term and by combining it with various UE- and cell-specific power offset terms. An example PC formula from Rel-10 is in the following form (see also 3GPP contribution paper R1-111216: "36.213 CR 0273, Corrections to Rel-10 LTE-Advanced features in 36.213"):

$$P = \min(P_{max}, 10\log 10(M+P_0+\alpha*PL+C)) \text{ [dBm]} \qquad (1)$$

where $P_{max}$ represents a cap on the output power (in dBm), M represents the scheduled UL bandwidth, $P_0$ is a UE- and/or cell-specific power offset, $\alpha$ is a cell-specific fractional path loss compensation factor, PL is an estimate of the path loss performed by the UE and C is a correction term possibly obtained as a combination of multiple power correction terms, possibly including closed-loop power control correction terms.

The UE estimates the path loss PL based on the difference (in dB) between the received power for cell-specific common reference signals (CRS) and the nominal power of such reference signals:

$$PL = referenceSignalPower - \text{higher layer filtered RSRP,}$$

where *referenceSignalPower* is configured by higher layer signaling, e.g. RRC, and the reference signal received power (RSRP) is defined for the reference serving cell. Filtering of the RSRP may be configured by higher layer signaling and performed by the UE. The serving cell chosen as the reference serving cell and used for determining *referenceSignalPower* and higher layer filtered RSRP is configured by the higher layer parameter *pathlossReferenceLinking.*

For all reference signal received power (RSRP) and reference signal received quality (RSRQ) measurements the UE may apply layer 3 filtering as configured by the network, before using the measured results received from L1 for evaluation of reporting criteria or for measurement reporting. The main purpose of layer 3 filtering is to average the measurement results received from the physical layer to have a more accurate and reliable estimation of the reference signal measurements. The following formula is used to obtain the filtered measurement results (see 3GPP TS 36.331, v 10.3.0, section 5.5.3.2):

$$F_n = (1 - a) \cdot F_{n-1} + a \cdot M_n$$

Where $M_n$ is the latest received measurement result from the physical layer; $F_n$ is the filtered measurement result to be used for evaluation of reporting criteria or for measurement reporting; $F_{n-1}$ is the old filtered measurement result; a is a variable and derived from a = $1/2^{(k/4)}$, where k is the filter coefficient for either RSRP or RSRQ.

The first filtered measurement result will be also the first measurement result received from the physical layer since $F_0$ is set to $M_1$.

The network configures the higher layer filtering i.e. quantity configuration (filter coefficient) as part of the measurement configuration. The filter coefficient is configured for RSRP and RSRQ separately. Currently one filter coefficient applies for all E-UTRA RSRP or RSRQ measurements on the serving cell and neighbour cells. In a common network implementation the quantity configuration is signalled in the first measurement configuration after the initial connection establishment and is not expected to change frequently as long as the UE is in RRC_CONNECTED. However the higher layer signalling also allows the reconfiguration of the quantity configuration e.g. during the Handover procedure (see 3GPP TS 36.331, v 10.3.0, section 5.5.2.8, and the QuantityConfig IE specified in section 6.3.5).

US2005/0239410 discloses a method of processing radio link control measurements by passing measurement values through a filter circuit, comprised of a median filter followed by a linear filter. The linear filter is re-initialized if a change between consecutive median samples output by the median filter exceeds a defined difference threshold.

Coordinated multi-point (CoMP) transmission and reception is considered for LTE-Advanced Rel. 11 as a tool to improve the coverage of high data rates, the cell-edge throughput, and also to increase system throughput. CoMP implies dynamic coordination among multiple geographically separated transmission and/or reception points.

In this context, a "point" corresponds to a set of antennas covering essentially the same geographical area in a similar manner. Thus a point might correspond to one of the sectors at a site, but it may also correspond to a site having one or more antennas all intending to cover a similar geographical area. Often, different points represent different sites. Antennas correspond to different points when they are sufficiently geographically separated and/or having antenna diagrams pointing in sufficiently different directions. Techniques for CoMP entail introducing dependencies in the scheduling or transmission/reception among different points, in contrast to conventional cellular systems where a point from a scheduling point of view is operated more or less independently from the other points.

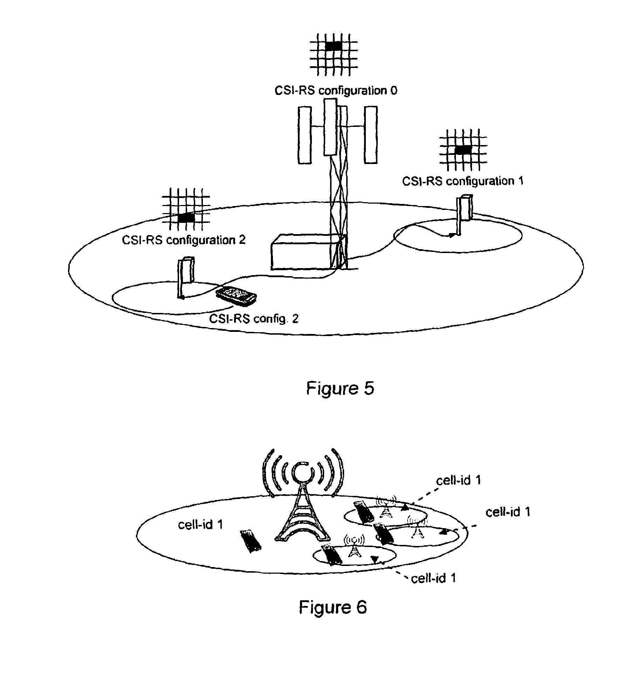

Figure 5 and 6 show two possible CoMP scenarios that are being studied in 3GPP.

Figure 5 shows a heterogeneous network with a macro base station equipped with low-power remote radio heads (RRHs) forming pico cells. The transmission/reception points created by the RRHs have different cell IDs than the macro cell. This will be referred to as "scenario 3" below.

Figure 6 shows a similar scenario, but where the transmission/reception points created by the RRHs have the same cell ID as the macro cell. This will be referred to as "scenario 4° below. In other words, from a UE perspective, the received signals appear to be coming from a single cell. This single cell-id approach is geared towards situations in which there is fast backhaul communication between the points associated to the same cell. A typical case would be a base station serving one or more sectors on a macro level as well as having fast fiber connections to the remote radio heads, also referred to as remote radio units (RRUs) playing the role of the other points sharing the same cell-id. Those RRUs could represent low power points with one or more antennas each. Another example is when all the points have a similar power class with no single point having more significance than the others. The base station would then handle the signals from all RRUs in a similar manner.

One advantage of the shared cell approach shown in Figure 6 is that it allows decoupling of the downlink with the uplink so that for example path loss based reception point selection can be performed in uplink while not creating a severe interference problem for the downlink, where the UE may be served by a transmission point different from the point used in the uplink reception. Typically, this means that the UE's transmissions are received by a pico point while in downlink, the UE receives from the macro point.

When CoMP scenarios such as scenario 3 and 4 are taken into consideration, it turns out that enhancements to the uplink power control for open-loop as well as closed-loop operation may be needed.

In particular, it is noted that since RSRP is based on DL power measurements on CRS, UL power control (PC) results will be coupled to the DL cell assignment. Such interplay may lead to undesired consequences.

In case of CoMP Scenario 3 the path loss term $PL_c$ in the open-loop part of the UL PC formula is determined by the CRS associated to the serving DL cell. However, for some UEs the preferred UL serving cell does not coincide with the DL serving cell. Such a mismatch is increased by the following factors:

- Power imbalance between macro/pico cells
- Limited range extension
- The pico UL coverage area is larger than its DL coverage area.

The above problem leads to suboptimal UL PC, leading to unnecessary large UL interference and power consumption for the UEs.

The same problems listed for Scenario 3 apply also for Scenario 4. However, assuming that CRS are shared over the whole HetNet, the situation becomes even more challenging as it is impossible to adjust UL PC in Scenario 4 according to the selected UL reception point(s) for each UE.

Power control for SRS is based on path loss measurements on the same reference signals as for PUSCH. Therefore, the same problems pointed out for PUSCH apply also to SRS PC. However, SRS PC is even more critical, especially for TDD deployments. Typically, SRS need to be received with sufficient power at all potential DL CoMP transmission points, while PUSCH should typically be received only at UL CoMP reception point.

To ensure that the pathloss to the correct reception point is measured, it has been proposed to allow the eNB to configure a set of reference signals where the UE can measure the path loss used on the power control process.

Measuring the pathloss on CRS, as it is done in Rel.10, is problematic in scenario 4, since the macro BS and all its associated pico BS transmit the same CRS (which is coupled to the Cell-ID) making impossible for the UE to measure the PL to individual reception points. Even in scenario 3, measuring on the pico BS CRS is challenging due to the high interference from the macro BS CRS. In addition, pathloss estimation on new carrier types without CRS would not be possible.

As for example disclosed in SAMSUNG, "CoMP architecture and CoMP RRM measurement", published 07-11-2011, R2-116070, 3rd Generation Partnership Project (3GPP), Sophia-Antipolis Cedex ; France, XP050564232, a good alternative to CRS for pathloss estimation is to measure on CSI-RS, which are transmitted through the whole bandwidth (BW), in contrast to demodulation reference signals (DM-RS). The problem of high interference between different nodes' CRS in Scenario 3 may be avoided by CSI-RS muting.

Thus, it has been proposed that the UE is instructed by the network to measure the pathloss corresponding to the UE's reception points on a set of CSI-RS. Each set contains one or more CSI-RS, each with its corresponding Tx Power, enabling the UE to obtain a pathloss measurement for each CSI-RS. When a set contains more than one CSI-RS, the UE combines the multiple pathloss measurements according to a certain function, for example by taking the lowest pathloss measurement, and uses the resulting pathloss to perform power control. CSI-RS already configured for feedback measurements may be reused when possible, avoiding additional overhead.

However, there is still a need in the art for improved mechanisms for performing reference signal measurements, in particular in CoMP scenarios.

SUMMARY

Particular embodiments improve the accuracy of measurement quantities obtained based on filtered measurements by enabling filter memory reset events triggered by specific configuration and/or reconfiguration commands.

According to some embodiments, a method for obtaining a measurement quantity is provided. The measurement quantity is based on a filtered reference signal (RS) measurement value. The method is executed in a wireless device, e.g. a user equipment (UE). According to the method, the wireless device receives a filter reset indication from a network node. In response to the indication, the wireless device resets one or more RS measurement filters. The wireless device then obtains a new filtered RS measurement value, and obtains the measurement quantity based on the new filtered RS measurement value. In some variants, the filter reset indication is a reconfiguration of a new RS, or a set of RS, to be used for measurements. The wireless device then resets the filter or filters that use measurements of the reconfigured RS. In other variants, the filter reset indication is a filter reset message, which may indicate one or more filters to be reset, or one or more RS whose corresponding filters should be reset. In yet further variants, the filter reset indication is an indication that the RS transmit power for one or more RS has changed or will be changed. The wireless device will then reset the filter or filters that use measurements of the changed one or more RS.

In a particular embodiment, the RS measurement value is the reference signal received power (RSRP), and the measurement quantity is the path loss.

In some variants, the measurement quantity may be the filtered RS measurement value. Thus, in one particular embodiment the RS measurement value is the RSRP, and the measurement quantity is the filtered RSRP. In an optional step, the measurement quantity is signalled to a network node, e.g. a serving eNB.

According to some embodiments, a wireless device is provided, comprising radio circuitry and processing circuitry. The processing circuitry is configured to receive, from a network node, via the radio circuitry, a filter reset indication. The processing circuitry is further configured to reset, in response to the indication, one or more RS measurement filters. The processing circuitry is further configured to obtain a new filtered RS measurement value, and to obtain the measurement quantity based on the new filtered RS measurement value.

According to some examples a method in a network node, e.g. an eNB, is provided. The network node is connected to a wireless device, e.g. a user equipment (UE). The network node decides to reconfigure one or more reference signals (RS) that the UE uses for measurements. In response to the decision, the network node sends a filter reset message to the UE, indicating the reference signal or set of reference signals concerned. This indicates to the UE that all filters applied to measurements of the indicated reference signals should be reset. Alternatively, the filter reset message may indicate one or more specific filters that need to be reset (e.g. the RSRP filter).

In yet another alternative, the filter reset message does not indicate any reference signals or filters. In this case, the UE may assume that all filters using RS measurements need to be reset.

In a variant, the filter reset message also indicates at least one filter coefficient to be applied. The filter coefficient may be indicated per reference signal, indicating that the new coefficient should be applied for all filters using that reference signal. Alternatively, the filter coefficient may be indicated per filter.

According to some examples, a network node is provided, comprising radio circuitry and processing circuitry. The network node is connectable, via the radio circuitry, to a wireless device. The processing circuitry is configured to decide to reconfigure one or more reference signals (RS) that the UE uses for measurements. The processing circuitry is configured to send, via the radio circuitry and in response to the decision, a filter reset message to the UE, indicating the reference signal or reference signals concerned. Particular embodiments allow flexible reconfiguration of measurements as well as time domain filtering of the measurements performed by the UE. Compared to the state of the art, in case of reconfiguration of the RS employed for measurement the output of the filter is not affected by delay in convergence.

Generally speaking, the concepts presented may be applied to any kind of filtered measurement, i.e. not exclusively to reference signal measurements.

Modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

BRIEF DESCRIPTION OF THE DRAWINGS

Figure 1    is a schematic diagram illustrating the LTE downlink physical resource.
Figure 2    is a schematic diagram illustrating the LTE time-domain structure.
Figure 3    is a schematic diagram illustrating mapping of LTE physical control channels, data channels and cell specific reference signals within a downlink subframe.
Figure 4    is a schematic diagram illustrating reference signal patterns over an RB pair.
Figure 5    is a schematic diagram showing a CoMP scenario.
Figure 6    is a schematic diagram showing a CoMP scenario.
Figure 7    is a schematic block diagram illustrating a network node according to some examples.
Figure 8    is a schematic block diagram illustrating a wireless device according to some embodiments.
Figure 9    is a combined signalling diagram and flow chart illustrating a method according to some embodiments.
Figure 10    is a flow chart illustrating a method according to some embodiments.
Figure 11    is a flow chart illustrating a method according to some embodiments.
Figure 12    is a flow chart illustrating a method according to some embodiments.
Figure 13    is a flow chart illustrating a method according to some embodiments.
Figure 14    is a flow chart illustrating a method according to some embodiments.
Figure 15    is a flow chart illustrating a method according to some examples.

DETAILED DESCRIPTION

In order to improve the quality of estimation of certain parameters (e.g., RSRP and RSRQ) the UE performs filtering of measurements, e.g., in time domain. The filtered measurement may be used by the UE or reported to the eNB, depending on the application. An example is RSRP measurements that are collected for path loss estimation, which are filtered in time domain in order to smooth estimation errors. The underlying assumption that allows such filtering is that the signal estimated by the filter is varying slowly and that it may be assumed as approximately locally constant within the memory of the filter.

In context of this disclosure, the term "filter" refers to any function of a current measurement value and at least one previously obtained measurement value. As a particular example, the function may be a smoothing function, in particular an exponential smoothing function. The function could also be an average, weighted average, or moving average of the current and previous measurement values. The output of the function may be referred to as a "filtered measurement value". "RS measurement filter" refers to a filter applied to RS measurements. The expression "a filter using a reference signal" means that the filter is applied to measurements on that reference signal.

Currently, path loss estimates are based on common reference signals (CRS) which are typically transmitted by each cell. When a UE is connected to a certain cell, the corresponding path loss is estimated and it is employed for adjustment of the transmit power.

One potential enhancement for the LTE system consists of enabling estimation of the path loss based on different RS than CRS, e.g., CSI-RS. Various sets of CSI-RS may be transmitted by different transmission points within the cell. Furthermore, different sets of CSI-RS may be transmitted by transmission points belonging to different cells. Different CSI-RS may also transmitted by the different transmit antennas (or different combinations of the transmit antennas) at a given transmission point. Each CSI-RS is characterized, e.g., by a specific mapping to the subframe as well as a specific sequence, allowing the UE to estimate the channel for different CSI-RS with acceptable interference. It should be noted that the invention applies to all sets of RS used for path loss estimation, where CSI-RS is a specific example. The specific CSI-RS employed for path loss estimation is signalled by the eNB to the UE. Since CSI-RS may be transmitted from different transmission points, it is possible for the network to configure the UE so that the path loss corresponding to a specific reception point is considered for power control adjustment. This is particularly convenient, e.g., in a CoMP setting where the transmission point for CRS and the intended reception point for a given UE may not coincide.

An issue that is observed here is that, whenever the CSI-RS for path loss estimation in a UE is reconfigured, such path loss measurement may change abruptly. However, memory in the measurement filter introduces a significant delay in the convergence of the filter which affects the ability of the UE to promptly adapt its transmission power.

Some embodiments comprise resetting the memory of the measurement filter for path loss estimation whenever the RS employed for the measurement is reconfigured. One example of filter memory reset trigger event consists of the reconfiguration of the CSI-RS employed for RSRP or RSRQ measurements, for path loss estimation in light of transmit power adjustment.

Another example of filter reset trigger event is the reconfiguration of the transmit power associated to a given RS employed for path loss estimation, with the aim of power control.

Another example of filter reset trigger event is the reconfiguration of the change of the type of RS (e.g., from CRS to CSI-RS, or vice versa) employed for path loss estimation and power control.

It is observed here that such filtered measurements may be employed for other uses than path loss estimation for power control, without falling outside the scope of this invention. An example is the use of signal strength (RSRP), signal quality (RSRQ) and/or path loss estimates for the selection of a preferred set of transmit and/or reception points for CoMP applications.

The filter memory reset operation may in principle be implemented in any fashion that removes the dependency of the output of the filter from earlier measurements, relative to the filter memory reset trigger time.

For example, assuming an order 1 autoregressive filter with expression

$$y(n) = alpha*y(n-1) + (1-alpha)*x(n) \qquad\qquad (1)$$

where y(n) is the output of the filter at time n, x(n) is the unfiltered measurement at time n and alpha is a so called forgetting factor (typically 0<=alpha<=1) and assuming a filter memory reset event at time n, the filter algorithm (1) is applied to the modified quantity y(n-1)=x(n), which corresponds overriding the filter memory y(n-1).

In another example the network has the possibility of sending a filter reset command to the UE for a specific measured resource, i.e. RS or set of RS. Such a trigger event may be signalled, e.g., when the transmission point for a specific RS used for a measurement is changed.

In another example of the invention the filter coefficients (e.g., the parameter alpha in Eq.(1)) are different for different RS employed for measurement purposes. In particular, different filter coefficients may be applied if the measurements are based on CRS or CSI-RS. The coefficients are implicitly or explicitly updated when the RS employed for a specific measurement are reconfigured by the network. As an example, the filter coefficients determine the length of the filter memory and they are configured for each RS in order to match the properties of such RS and of the measured quantity. As an example, the filter coefficients are chosen for each RS in order to match the time periodicity of the RS and the statistical properties of the measured signal.

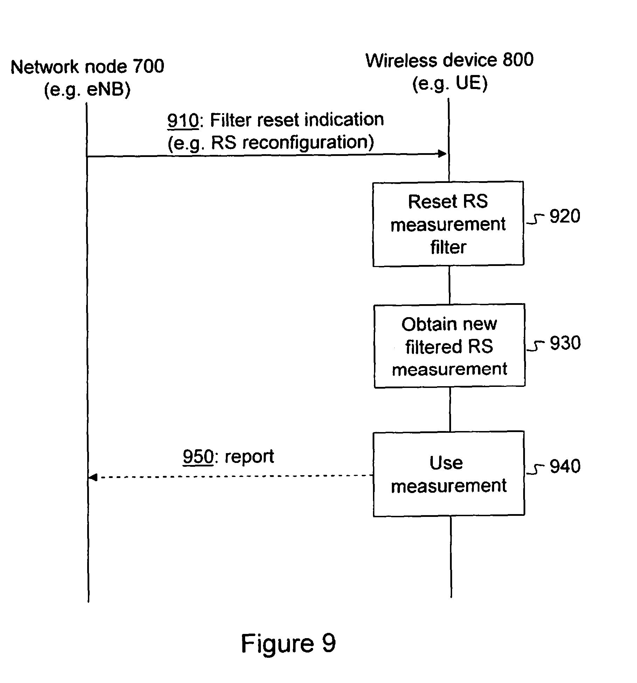

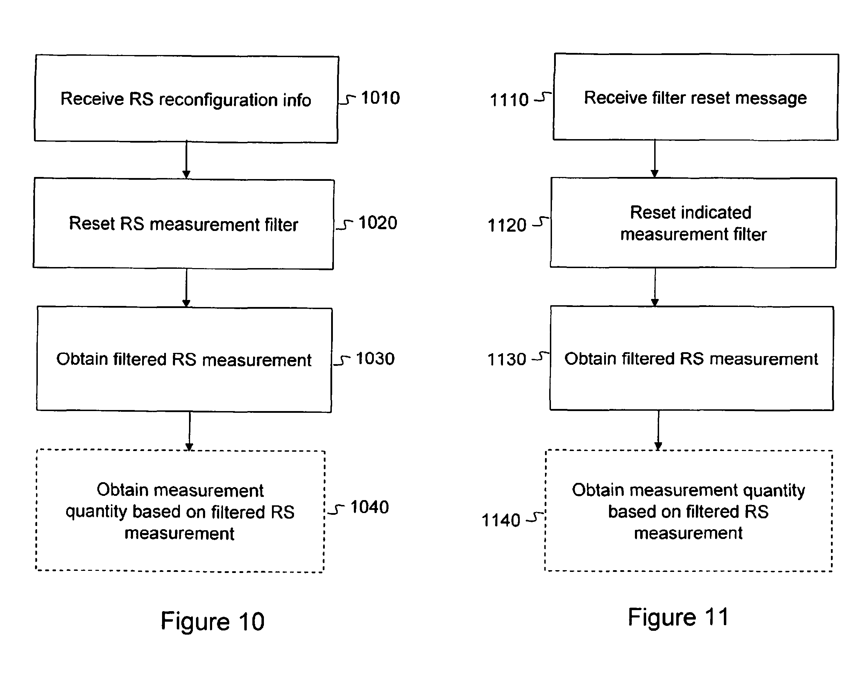

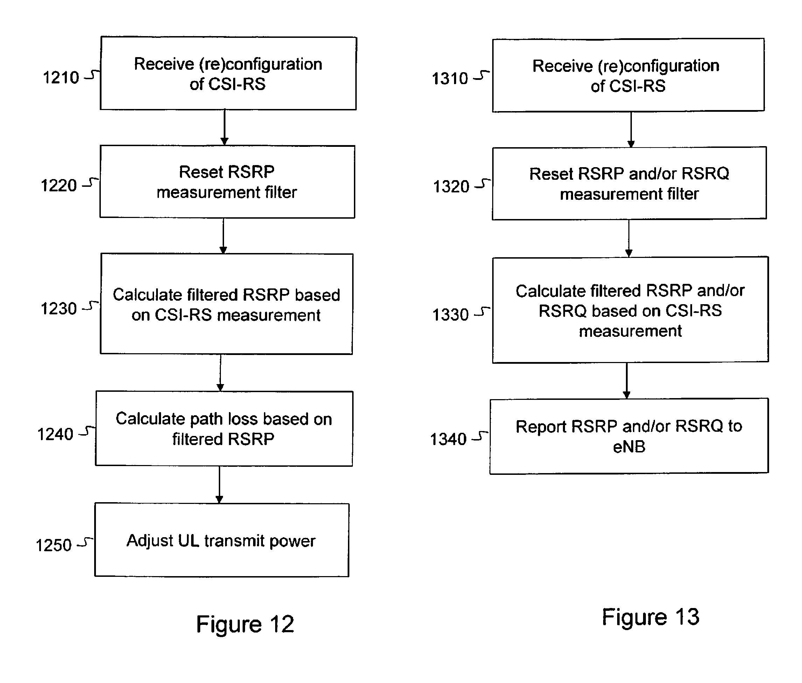

The signaling diagram in Figure 9, and the flowcharts in Figures 10-15 illustrate various embodiments of the invention.

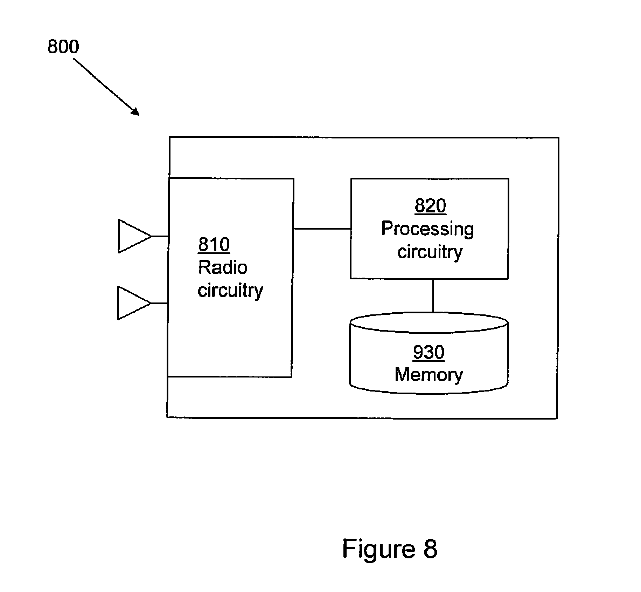

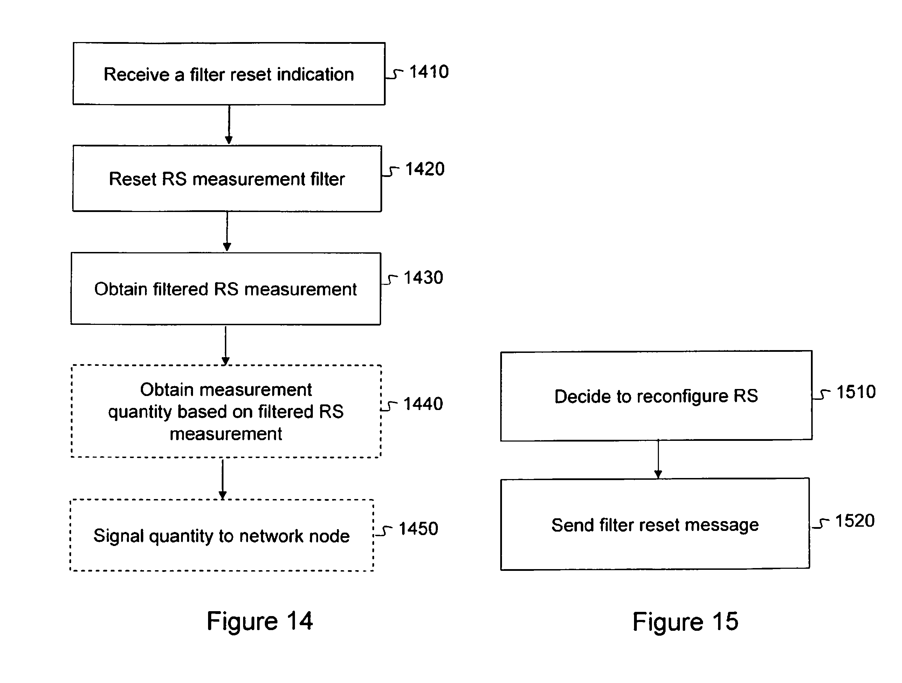

Referring to Figure 14, some embodiments provide a method for obtaining a measurement quantity based on a filtered reference signal measurement. The method is executed in a wireless device, such as wireless device 800 shown in Figure 8. In some variants, the wireless device is a user equipment. The wireless device may be comprised in a wireless network, such as one of the networks illustrated in Figure 5 or 6.

According to the method, the wireless device receives 1410 a filter reset indication. The filter reset indication may be received from a network node, e.g. the network node serving the wireless device. In some variants, the network node is an eNodeB.

In response to the indication, the wireless device resets 1420 one or more reference signal measurement filters.

The wireless device then obtains 1430 a new filtered reference signal measurement value, and obtains 1440 the measurement quantity based on the new filtered reference signal measurement value. In some variants, the reference signal measurement value is the reference signal received power, RSRP. The measurement quantity may be the path loss, or the filtered RSRP.

Optionally, the wireless device may signal 1450 the measurement quantity to a network node, e.g. the serving eNodeB.

Figure 11 shows an embodiment based on the one shown in figure 14, wherein the filter reset indication is a filter reset message. Steps 1120-1140 correspond to 1420-1440 described above. The filter reset message may indicate one or more filters to be reset, or one or more RS whose corresponding filters should be reset.

Figure 10 shows another embodiment based on the one shown in Figure 14, wherein the filtered reset indication is a reconfiguration of a new reference signal, or set of reference signals, to be used for measurements. Steps 1020-1040 correspond to 1420-1440 described above. In step 1420, the wireless device may reset 1420 the specific filter or filters that use measurements of the reconfigured reference signal or signals.

In another variation of the embodiment shown in Figure 14, the filter reset indication is an indication that the RS transmit power for one or more RS has changed or will be changed. The wireless device may then reset 1420 the filter or filters that use measurements of the changed one or more RS.

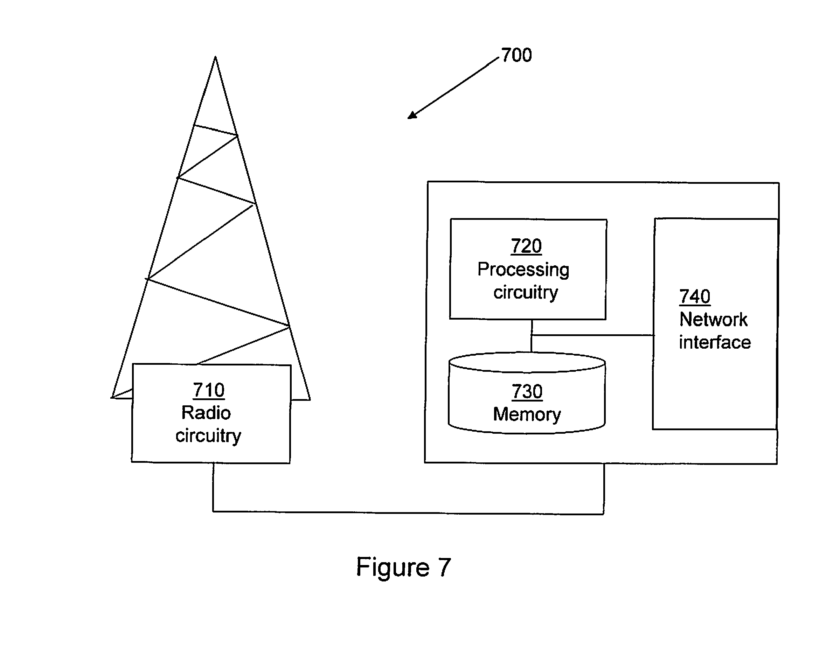

Referring now to Figure 15, some embodiments provide a method executed in a network node, such as network node 700 shown in Figure 7. In some variants, the network node is an eNodeB. The network node is connected to a wireless device, such as wireless device 800 shown in Figure 8. Furthermore, the network node and wireless device may be comprised in a wireless network, such as one of the networks illustrated in Figure 5 or 6.

According to the method, the network node decides 1510 to reconfigure one or more reference signals that the wireless device uses for measurements.

In response to the decision, the network node sends 1520 a filter reset message to the wireless device. In one variant, the filter reset message indicates the reference signal or set of reference signals concerned. In another variant, the filter reset message indicates one or more specific filters that need to be reset.

The method filter reset message may further indicate at least one filter coefficient to be applied. The filter coefficient is indicated per reference signal, or per filter.

Although the described solutions may be implemented in any appropriate type of telecommunication system supporting any suitable communication standards and using any suitable components, particular embodiments of the described solutions may be implemented in an LTE network, such as that illustrated in Figure 5 or 6.

The example network may further include any additional elements suitable to support communication between wireless devices or between a wireless device and another communication device (such as a landline telephone). Although the illustrated wireless device may represent a communication device that includes any suitable combination of hardware and/or software, this wireless device may, in particular embodiments, represent a device such as the example wireless device 800 illustrated in greater detail by Figure 8. Similarly, although the illustrated network nodes may represent network nodes that includes any suitable combination of hardware and/or software, these network nodes may, in particular embodiments, represent devices such as the example network node 700 illustrated in greater detail by Figure 7.

As shown in Figure 8, the example wireless device 800 includes processing circuitry 820, a memory 830, radio circuitry 810, and at least one antenna. The radio circuitry may comprise RF circuitry and baseband processing circuitry (not shown). In particular embodiments, some or all of the functionality described above as being provided by mobile communication devices or other forms of wireless device may be provided by the processing circuitry 820 executing instructions stored on a computer-readable medium, such as the memory 830 shown in Figure 8. Alternative embodiments of the wireless device 800 may include additional components beyond those shown in Figure 8 that may be responsible for providing certain aspects of the wireless device's functionality, including any of the functionality described above and/or any functionality necessary to support the solution described above.

In some embodiments, the processing circuitry 820 is configured to receive, via the radio circuitry 810, a filter reset indication. The processing circuitry 820 is further configured to reset, in response to the indication, one or more reference signal measurement filters, to obtain a new filtered reference signal measurement value, and to obtain a measurement quantity based on the new filtered reference signal measurement value.

In various other embodiments, the processing circuitry 820 is configured to perform any of the methods described above in connection with Figures 9-14.

As shown in Figure 7, the example network node 700 includes processing circuitry 720, a memory 730, radio circuitry 710, and at least one antenna. The processing circuitry 720 may comprise RF circuitry and baseband processing circuitry (not shown). In particular embodiments, some or all of the functionality described above as being provided by a mobile base station, a base station controller, a relay node, a NodeB, an enhanced NodeB, and/or any other type of mobile communications node may be provided by the processing circuitry 720 executing instructions stored on a computer-readable medium, such as the memory 730 shown in Figure 7. Alternative embodiments of the network node 700 may include additional components responsible for providing additional functionality, including any of the functionality identified above and/or any functionality necessary to support the solution described above.

In some examples, the network node 700 is connectable, via the radio circuitry 710, to a wireless device 800 such as the one shown in Figure 8. The processing circuitry 720 is configured to decide to reconfigure one or more reference signals that the wireless device uses for measurements, and to send, via the radio circuitry 710 and in response to the decision, a filter reset message to the wireless device.

It should be noted that although terminology from 3GPP LTE has been used in this disclosure to exemplify the invention, this should not be seen as limiting the scope of the invention to only the aforementioned system. Other wireless systems, including WCDMA, WiMax, UMB and GSM, may also benefit from exploiting the ideas covered within this disclosure.

The present disclosure has set forth examples where the measurement quantity is the path loss, which is applied for power control. Other examples illustrate a measurement quantity (e.g. RSRP or RSRQ) being signalled to a network node for the purpose of making a handover decision. However, it is emphasized that these examples should be viewed as illustrative and not limiting. The concepts presented may be applied for any filtered RS measurement or measurement quantity based on filtered RS measurements, e.g. path loss, interference metrics, or signal-to-noise (SNR) estimates. Furthermore, the filtered measurement or measurement quantity may be used for a variety of purposes, either by the wireless device itself, or after being signalled to a network node. Some non-limiting examples are handover, definitions of CoMP transmission/reception sets, and mobility measurements.

It is further noted that although specific examples refer to CSI-RS, any suitable reference signal may be used.

The term "wireless device" includes any type of wireless node which is able to communicate with another wireless device by wirelessly transmitting and/or receiving wireless signals. Thus, the term "wireless device" as used throughout this disclosure encompasses, but is not limited to: a user equipment, a mobile terminal, a base station, a relay node, e.g. fixed or mobile relay, repeater, a wireless device for machine-to-machine communication, an integrated or embedded wireless card, an externally plugged in wireless card etc.

When using the word "comprise" or "comprising" it shall be interpreted as non- limiting, i.e. meaning "consist at least of".

ABBREVIATIONS

| | |
|---|---|
| E-UTRA | Evolved Universal Terrestrial Radio Access |
| PC | Power control |
| RS | reference signals |
| Hetnet | heterogeneous network |
| CRS | Common Reference Signals, or cell-specific reference signals |
| CSI-RS | Channel State Information Reference Signals |
| LTE | Long Term Evolution |
| MIMO | Multiple-Input-Multiple-Output |
| R8 | LTE Release 8 |
| UL | Uplink |
| PDCCH | Physical Downlink control channel |
| UE | User Equipment |
| DCI | Downlink Control Information |
| CoMP | Coordinated multipoint processing |
| RSRP | Reference Signal Received Power |
| RSRQ | Reference Signal Received Quality |

**Claims**

1. A method for obtaining a measurement quantity based on a filtered reference signal measurement, the method being executed in a wireless device, the method comprising:

    - receiving (1410) a filter reset indication from a network node;
    - in response to the indication, resetting (1420) one or more reference signal measurement filters; and
    - obtaining (1430) a new filtered reference signal measurement value; and
    - obtaining (1440) the measurement quantity based on the new filtered reference signal measurement value.

2. The method of claim 1, wherein the filter reset indication is a filter reset message;

3. The method of claim 2, wherein the filter reset message indicates one or more filters to be reset, or one or more reference signals whose corresponding filters should be reset

4. The method of claim 1, wherein the filtered reset indication is a reconfiguration of a new reference signal, or set of reference signals, to be used for measurements.

5. The method of claim 4, comprising resetting (1420) the filter or filters that use measurements of the reconfigured reference signal or signals.

6. The method of claim 1, wherein the filter reset indication is an indication that the reference signal transmit power for one or more reference signals has changed or will be changed.

7. The method of claim 6, comprising resetting (1420) the filter or filters that use measurements of the changed one or more reference signals.

8. The method of any one of claims 1-7, wherein the reference signal measurement value is the reference signal received power, RSRP.

9. The method of claim 8, wherein the measurement quantity is the path loss.

10. The method of claim 8, wherein the measurement quantity is the filtered RSRP.

11. The method of any one of claims 1-10, further comprising signalling (1450) the measurement quantity to a network node.

12. The method of any one of claims 1-11, wherein the wireless device is a user equipment.

13. A wireless device (800) comprising radio circuitry (810) and processing circuitry (820), wherein the processing circuitry (820) is configured to:

- receive from a network node, via the radio circuitry (810), a filter reset indication;
- reset, in response to the indication, one or more reference signal measurement filters;
- obtain a new filtered reference signal measurement value; and
- obtain a measurement quantity based on the new filtered reference signal measurement value.

**Patentansprüche**

1. Verfahren zum Ermitteln einer Messgröße auf Grundlage einer gefilterten Referenzsignalmessung, wobei das Verfahren in einer drahtlosen Vorrichtung ausgeführt wird, wobei das Verfahren Folgendes umfasst:

- Empfangen (1410) einer Filterrücksetzangabe von einem Netzknoten;
- in Reaktion auf die Angabe Zurücksetzen (1420) von einem oder mehreren Referenzsignalmessungsfiltern; und
- Ermitteln (1430) eines neuen gefilterten Referenzsignalmesswerts; und
- Ermitteln (1440) der Messgröße auf Grundlage des neuen gefilterten Referenzsignalmesswerts.

2. Verfahren nach Anspruch 1, wobei die Filterrücksetzangabe eine Filterrücksetznachricht ist.

3. Verfahren nach Anspruch 2, wobei die Filterrücksetzangabe einen oder mehrere Filter zum Zurücksetzen oder ein oder mehrere Referenzsignale angibt, deren entsprechende Filter zurückgesetzt werden sollen.

4. Verfahren nach Anspruch 1, wobei die Filterrücksetzangabe eine Rekonfigurierung eines neuen Referenzsignals oder Satzes von Referenzsignalen ist, das oder die für Messungen verwendet werden.

5. Verfahren nach Anspruch 4, umfassend Zurücksetzen (1420) des Filters oder der Filter, der oder die Messungen des rekonfigurierten Referenzsignals oder der rekonfigurierten Referenzsignale verwenden.

6. Verfahren nach Anspruch 1, wobei Filterrücksetzangabe eine Angabe ist, dass die Referenzsignalübertragungsleistung für ein oder mehrere Referenzsignale sich geändert hat oder sich ändern wird.

7. Verfahren nach Anspruch 6, umfassend Zurücksetzen (1420) des Filters oder der Filter, der oder die Messungen des geänderten einen Referenzsignals oder der geänderten mehreren Referenzsignale verwenden.

8. Verfahren nach einem der Ansprüche 1-7, wobei der Referenzsignalmesswert die Referenzsignalempfangsleistung RSRP ist.

**9.** Verfahren nach Anspruch 8, wobei die Messgröße der Pfadverlust ist.

**10.** Verfahren nach Anspruch 8, wobei die Messgröße die gefilterte RSRP ist.

**11.** Verfahren nach einem der Ansprüche 1-10, ferner umfassend Signalisieren (1450) der Messgröße an einen Netzknoten.

**12.** Verfahren nach einem der Ansprüche 1-11, wobei die drahtlose Vorrichtung ein Benutzergerät ist.

**13.** Drahtlose Vorrichtung (800), umfassend Funkschaltungen (810) und Verarbeitungsschaltungen (820), wobei die Verarbeitungsschaltungen (820) dazu konfiguriert sind:

- von einem Netzknoten über die Funkschaltungen (810) eine Filteniicksetzangabe zu empfangen;
- in Reaktion auf die Angabe einen oder mehrere Signalmessungsfilter zurückzusetzen;
- einen neuen gefilterten Referenzsignalmesswert zu ermitteln; und
- eine Messgröße auf Grundlage des neuen gefilterten Referenzsignalmesswerts zu ermitteln.

## Revendications

**1.** Procédé d'obtention d'une grandeur de mesure basée sur la mesure d'un signal de référence filtré, le procédé étant exécuté sur un appareil sans fil, le procédé comprenant :

- la réception (1410) d'une indication de réinitialisation de filtre à partir d'un noeud de réseau;
- en réponse à l'indication, la réinitialisation (1420) d'un ou de plusieurs filtres de mesure de signal de référence ; et
- l'obtention (1430) d'une nouvelle valeur de mesure de signal de référence filtré ; et
- l'obtention (1440) de la grandeur de mesure basée sur la nouvelle valeur de mesure de signal de référence filtré.

**2.** Procédé selon la revendication 1, dans lequel l'indication de réinitialisation de filtre est un message de réinitialisation de filtre.

**3.** Procédé selon la revendication 2, dans lequel le message de réinitialisation de filtre identifie un ou plusieurs filtres devant être réinitialisés, ou un ou plusieurs signaux de référence dont les filtres correspondants doivent être réinitialisés.

**4.** Procédé selon la revendication 1, dans lequel l'indication de réinitialisation du filtre est une reconfiguration d'un nouveau signal de référence, ou un ensemble de signaux de référence, devant être utilisé pour les mesures.

**5.** Procédé selon la revendication 4, comprenant la réinitialisation (1420) du ou des filtres qui utilisent les mesures du ou des signaux de référence reconfigurés.

**6.** Procédé selon la revendication 1, dans lequel l'indication de réinitialisation du filtre est une indication que le signal de référence transmet une puissance pour un ou plusieurs des signaux de référence qui ont changé ou qui seront changés.

**7.** Procédé selon la revendication 6, comprenant la réinitialisation (1420) du ou des filtres qui utilisent les mesures de l'un ou de plusieurs des signaux de référence changés.

**8.** Procédé selon l'une quelconque des revendications 1-7, dans lequel la valeur de mesure du signal de référence est la puissance reçue du signal de référence, RSRP.

**9.** Procédé selon la revendication 8, dans lequel la grandeur de mesure est affaiblissement de propagation.

**10.** Procédé selon la revendication 8, dans lequel la grandeur de mesure est un RSRP filtré.

**11.** Procédé selon l'une quelconque des revendications 1-10, comprenant en outre la signalisation (1450) de la quantité de mesure à un noeud de réseau.

**12.** Procédé selon l'une quelconque des revendications 1-11, dans lequel l'appareil sans fil est un équipement utilisateur.

**13.** Appareil sans fil (800) comprenant un circuit radio (810) et un circuit de traitement (820), dans lequel le circuit de traitement (820) est configuré pour :

- recevoir à partir d'un noeud de réseau, via le circuit radio (810), une indication de réinitialisation de filtre ;
- réinitialiser, en réponse à l'indication, un ou plusieurs filtres de mesure de signal de référence ;
- obtenir une nouvelle valeur de mesure de signal de référence filtré ; et
- obtenir la grandeur de mesure basée sur la nouvelle valeur de mesure de signal de référence filtré.

One resource element

Δf = 15 kHz

One OFDM symbol including cyclic prefix

Figure 1

Sub-frame ($T_{subframe}$ = 1 ms)

#0  #1 · · ·  #9

Radio frame ($T_{frame}$ = 10 ms)

Figure 2

One subframe

Control region    Control signaling    Reference Symbols

Figure 3

Figure 4: Resource element grid over an RB pair showing potential positions for Rel-9/10 UE specific RS, CSI-RS (marked with a number corresponding to the CSI-RS antenna port), and CRS.

CSI-RS configuration 0

CSI-RS configuration 1

CSI-RS configuration 2

CSI-RS config. 2

Figure 5

cell-id 1

cell-id 1

cell-id 1

cell-id 1

cell-id 1

Figure 6

EP 2 781 043 B1

Figure 7

800

**810**
Radio
circuitry

**820**
Processing
circuitry

**930**
Memory

Figure 8

Figure 9

EP 2 781 043 B1

EP 2 781 043 B1

```
┌─────────────────────────────────┐
│                                 │
│   Receive RS reconfiguration info│  ⌐ 1010
│                                 │
└─────────────────────────────────┘
                │
                ▼
┌─────────────────────────────────┐
│                                 │
│   Reset RS measurement filter   │  ⌐ 1020
│                                 │
└─────────────────────────────────┘
                │
                ▼
┌─────────────────────────────────┐
│                                 │
│   Obtain filtered RS measurement│  ⌐ 1030
│                                 │
└─────────────────────────────────┘
                │
                ▼
┌ ─ ─ ─ ─ ─ ─ ─ ─ ─ ─ ─ ─ ─ ─ ─ ─ ┐
│      Obtain measurement         │
│   quantity based on filtered RS │  ⌐ 1040
│         measurement             │
└ ─ ─ ─ ─ ─ ─ ─ ─ ─ ─ ─ ─ ─ ─ ─ ─ ┘
```

**Figure 10**

```
          ┌─────────────────────────────────┐
          │                                 │
1110 ⌐    │   Receive filter reset message  │
          │                                 │
          └─────────────────────────────────┘
                          │
                          ▼
          ┌─────────────────────────────────┐
          │       Reset indicated           │
1120 ⌐    │     measurement filter          │
          │                                 │
          └─────────────────────────────────┘
                          │
                          ▼
          ┌─────────────────────────────────┐
          │                                 │
1130 ⌐    │  Obtain filtered RS measurement │
          │                                 │
          └─────────────────────────────────┘
                          │
                          ▼
          ┌ ─ ─ ─ ─ ─ ─ ─ ─ ─ ─ ─ ─ ─ ─ ─ ─ ┐
          │  Obtain measurement quantity    │
          │    based on filtered RS         │
1140 ⌐    │       measurement               │
          └ ─ ─ ─ ─ ─ ─ ─ ─ ─ ─ ─ ─ ─ ─ ─ ─ ┘
```

**Figure 11**

```
┌─────────────────────────────┐                    ┌─────────────────────────────┐
│   Receive (re)configuration  │                    │   Receive (re)configuration  │
│        of CSI-RS             │                    │        of CSI-RS             │
└─────────────────────────────┘                    └─────────────────────────────┘
              │                                                   │
              ▼                                                   ▼
┌─────────────────────────────┐                    ┌─────────────────────────────┐
│       Reset RSRP             │                    │    Reset RSRP and/or RSRQ    │
│   measurement filter         │                    │      measurement filter      │
└─────────────────────────────┘                    └─────────────────────────────┘
              │                                                   │
              ▼                                                   ▼
┌─────────────────────────────┐                    ┌─────────────────────────────┐
│  Calculate filtered RSRP     │                    │  Calculate filtered RSRP and/│
│   based on CSI-RS            │                    │  or RSRQ based on CSI-RS     │
│     measurement              │                    │       measurement            │
└─────────────────────────────┘                    └─────────────────────────────┘
              │                                                   │
              ▼                                                   ▼
┌─────────────────────────────┐                    ┌─────────────────────────────┐
│  Calculate path loss based   │                    │   Report RSRP and/or RSRQ    │
│    on filtered RSRP          │                    │        to eNB                │
└─────────────────────────────┘                    └─────────────────────────────┘
              │
              ▼
┌─────────────────────────────┐
│   Adjust UL transmit power   │
└─────────────────────────────┘
```

1210 — Receive (re)configuration of CSI-RS
1220 — Reset RSRP measurement filter
1230 — Calculate filtered RSRP based on CSI-RS measurement
1240 — Calculate path loss based on filtered RSRP
1250 — Adjust UL transmit power

1310 — Receive (re)configuration of CSI-RS
1320 — Reset RSRP and/or RSRQ measurement filter
1330 — Calculate filtered RSRP and/or RSRQ based on CSI-RS measurement
1340 — Report RSRP and/or RSRQ to eNB

Figure 12

Figure 13

Receive a filter reset indication — 1410

Reset RS measurement filter — 1420

Obtain filtered RS measurement — 1430

Obtain measurement quantity based on filtered RS measurement — 1440

Signal quantity to network node — 1450

Figure 14

Decide to reconfigure RS — 1510

Send filter reset message — 1520

Figure 15

**EP 2 781 043 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20050239410 A

### Non-patent literature cited in the description

- CoMP architecture and CoMP RRM measurement. *R2-116070, 3rd Generation Partnership Project,* 07 November 2011